# EUROPÄISCHE PATENTSCHRIFT

(11) **EP 0 685 920 B1**
(45) Veröffentlichungstag und Bekanntmachung des Hinweises auf die Patenterteilung: **09.07.1997**
(21) Anmeldenummer: 95250128.6
(22) Anmeldetag: 29.05.1995
(51) Int. Cl.: H02K 37/22, H02K 7/116

(54) **Schrittmotoreinrichtung**
Stepping motor device
Dispositif à moteur pas-à-pas

(30) Priorität: 02.06.1994 DE 4420382
(43) Veröffentlichungstag der Anmeldung: 06.12.1995
(73) Patentinhaber: Hartmann & Braun GmbH & Co. KG, 60487 Frankfurt (Main) (DE)
(72) Erfinder: Byell, Horst, D-30823 Garbsen (DE); Thönebe, Werner, D-30890 Barsinghausen (DE)
(74) Vertreter: Presting, Hans-Joachim, Dipl.-Ing.

(56) Entgegenhaltungen:
- EP-A- 0 132 813
- DE-U- 9 203 293
- US-A- 3 175 110

## Beschreibung

Die Erfindung betrifft eine Schrittmotoreinrichtung bestehend aus einem Schrittmotor mit einer Abtriebswelle, einer Schaltwelle und einem Tragrahmen zur Aufnahme und Lagerung der Schaltwelle, sowie mit einem, aus einem Schlauch aus elastischem Material bestehenden Federelement über welches die Abtriebswelle mit der Schaltwelle torsionselastisch gekoppelt ist.

Eine Schrittmotoreinrichtung der gattungsgemäßen Art ist aus der EP 0 132 813 A1 bekannt. Darin ist ein Schrittmotor gezeigt, welcher eine Abtriebswelle aufweist, die über ein torsionselastisches Element mit einer Schaltwelle verbunden ist. Die Schaltwelle selbst ist in einem Tragrahmen gelagert. An der Schaltwelle können außen die Drehmomente abgegriffen werden, die torsionselastisch von der Abtriebswelle des Schrittmotors auf die Schaltwelle übertragen werden. Die Verwendung solcher Schrittmotoreinrichtungen ist vielfältig. Generell werden Schrittmotoren Uberall dort eingesetzt, wo anstatt einer kontinuierlichen gleichförmigen Drehbewegung nur ruckartige und oftmals nur über einen Teil eines Vollwinkels verlaufende Drehbewegung gefordert sind. Somit finden Schrittmotoreinrichtungen dieser Art Anwendung in Uhren, in Schalterbetätigungen, etc. Beim Einsatz von Schrittmotoreinrichtungen in Prozeßaufzeichnungsgeräten, sogenannten Prozeßschreibern, ergibt sich, daß der Eingriff der Schaltwelle auf ein Getriebe durch die mehr oder weniger ruckartigen Bewegungen der Schaltwelle Getriebegeräusche erzeugt. Prozeßschreiber sind in den meisten Fällen in sogenannten Warten untergebracht. Da in solchen Warten zumeist viele solcher Schreiber untergebracht sind, wird die Geräuschentwicklung der Schrittmotoreinrichtungen natürlich zum Problem. Bei einer Schrittmotoreinrichtung der genannten gattungsgemäßen Art ist zwar durch die Unterteilung der Motorwelle in eine Abtriebswelle und eine damit torsionselastisch gekoppelte Schaltwelle das Rucken in der Drehbewegung etwas gedämpft; dies betrifft jedoch primär nur die weiche Abfederung der Beschleunigungs- und Bremsmomente. Der Eingriff auf ein Getriebe, welches an die Schaltwelle angebaut wird, erzeugt bei bekannten Einrichtungen dennoch Geräusche.

Der Erfindung liegt daher die Aufgabe zugrunde, eine Schrittmotoreinrichtung der gattungsgemäßen Art dahingehend weiterzubilden, daß bei Einbindung in eine Antriebseinheit die gesamte Einrichtung geräuschgedämpft ist, und eine kompakte Bauform erhalten bleibt.

Die gestellte Aufgabe ist bei einer Schrittmotoreinrichtung der gattungsgemäßen Art erfindungsgemäß dadurch gelöst, daß die mit der Antriebswelle torsionselastisch gekoppelte Schaltwelle mit einem untersetzenden Getriebe verbunden ist, welches direkt am Tragrahmen gelagert befestigt ist, und daß das Federelement, bezogen auf die Wellendurchmesser, so dimensioniert ist, daß im auf die Wellen gestülpten Zustand die notwendigen Drehmomente von der Abtriebswelle auf die Schaltwelle übertragbar sind.

Weitere vorteilhafte Ausgestaltungen sind in den Unteransprüchen angegeben. Desweiteren umfaßt die Erfindung eine erfindungsgemäße Verwendung einer solchen Schrittmotoreinrichtung in einem Prozeßschreiber zum Antrieb der Schreibelemente.

Die erzielten Vorteile gelten allgemein für die erfindungsgemäße Schrittmotoreinrichtung, und im speziellen besonders für die Verwendung einer solchen Schrittmotoreinrichtung in einem Prozeßschreiber. Die Vorteile zielen letztendlich auf einen glatten Lauf und auf eine erhebliche Geräuschdämpfung. Als Kern der Erfindung ist hierbei anzusehen, daß das mit der Schaltwelle verbundene untersetzende Getriebe direkt am Tragrahmen gelagert und befestigt ist. Die Tatsache, daß das Getriebe ein untersetzendes Getriebe ist, erzeugt an der Welle, d. h. primär zunächst an der Schaltwelle, eine gewisse mechanische Hemmung. Die durch die Hemmung erzeugten Kräfte wirken dem Antriebsmoment entgegen. Somit wird das Federelement gezielt im torsionselastischen Bereich beansprucht. Beim Einschalten des Schrittmotors stehen die Abtriebswelle, die Schaltwelle sowie die Getriebeelemente elastisch in Eingriff. Hinzu kommt nun, daß das Getriebe, welches mit der Schaltwelle verbunden ist, direkt am Tragrahmen gelagert befestigt ist. An diesem Tragrahmen ist auch die Schaltwelle gelagert. Der Tragrahmen selbst ist dabei mit dem Schrittmotorgehäuse direkt verbunden. Somit ergibt sich, daß neben dem torsionselastischen Spiel zwischen Schaltwelle und Abtriebswelle kein weiteres nennenswertes Spiel vorhanden ist. Zur Verdeutlichung kann man sagen, daß, wenn das Getriebe nicht direkt am Tragrahmen gekoppelt wäre, mechanische Fehlanpassungen zwischen Getriebe und Schaltwelle entstehen könnten,die ein Spiel entstehen lassen würden, über welches erhebliche Getriebegeräusche entstünden. Das heißt, wenn das Getriebe an einem anderen Bauteil mechanisch fixiert ist als der Schrittmotor selbst bzw. die Schrittmotoreinrichtung, dann können bei Schrittmotorbeaufschlagung, wenn auch kleine aber dennoch ruckartige Relativbewegungen zwischen Schrittmotoreinrichtung und Getriebe entstehen, die die besagten Getriebegeräusche verursachen. Bei der vorliegenden Erfindung ist daher das Getriebe direkt auf dem Tragrahmen gelagert und befestigt, der die Schaltwelle lagert und aufnimmt und ferner auch starr mit dem Schrittmotorgehäuse verbunden ist. Relativbewegungen zwischen Schrittmotoreinrichtung und Getriebe entstehen somit nicht mehr. Das im Getriebe immer vorhandene restliche Spiel wird in der oben bereits dargestellten Weise dadurch geräuschgedämpft, daß durch die elastische Torsionskopplung zwischen Abtriebswelle und Schaltwelle in Verbindung mit der Hemmung eines untersetzenden Getriebes und der direkten Befestigung am Tragrahmen eine nahezu vollständige Dämpfung entsteht. Die Schrittmotoreinrichtung der erfindungsgemäßen Art ist extrem geräuscharm und eignet sich besonders für die Verwendung zum Antrieb der Schreibelemente in Prozeßschreibern.

Die Erfindung ist in der Zeichnung dargestellt und im nachfolgenden näher beschrieben. Es zeigt:

Figur 1 Gesamtdarstellung der Schrittmotoreinrichtung in einem Prozeßschreiber.

Figur 2 Detaildarstellung der Schrittmotoreinrichtung.

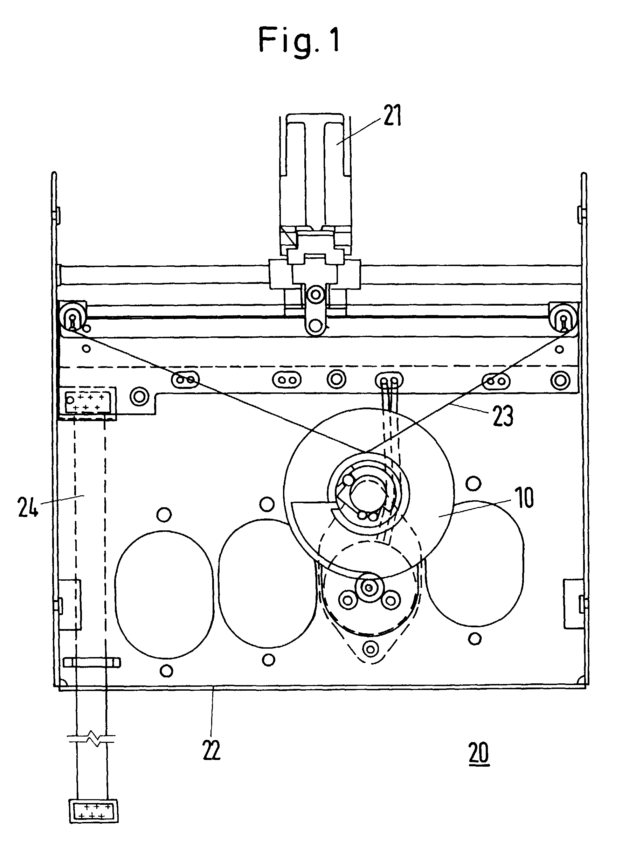

Figur 1 zeigt den Einsatz der erfindungsgemäßen Schrittmotoreinrichtung 10 in einem Prozeßschreiber 20 zum Antrieb der Schreibelemente 21. Die Schrittmotoreinrichtung 10 ist dabei innerhalb des Gehäuses 22 des Prozeßschreibers 20 angebracht und am Abgriff des äußeren Getriebezahnrades ist ein Riemen 23 angetrieben, welcher die Schreibfedern 21 bewegt.

Die Schrittmotoransteuerung erfolgt dabei über eine innerhalb des Prozeßschreibers angeordnete Elektronik 24 die die einkommenden Signale auswertet und die entsprechenden elektrischen Stellgrößen zum Antrieb des Schrittmotors erzeugt. Die Schreibfedern beschreiben dabei einen auf einer Schreibrolle geführten Papierstreifen.

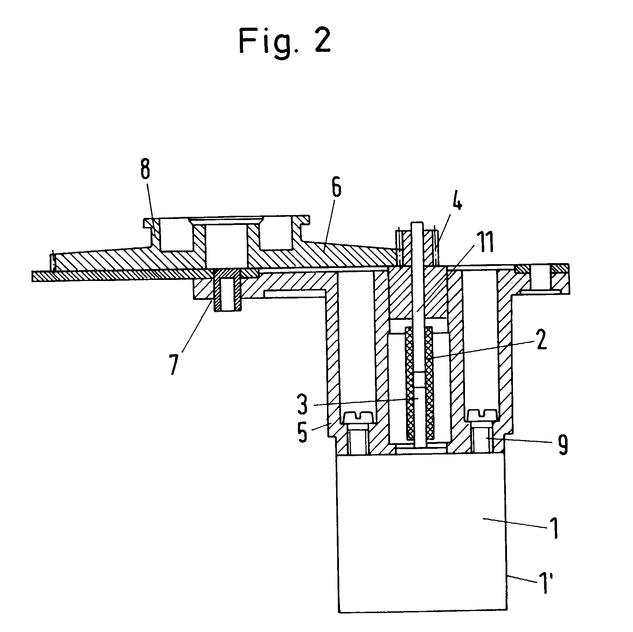

Figur 2 zeigt die erfindungsgemäße Schrittmotoreinrichtung in einer Detaildarstellung im Schnitt. Am Schrittmotor 1 tritt an einer Seite die Abtriebswelle 3 heraus. Das Schrittmotorgehäuse 1' ist mit dem Tragrahmen 5 beispielsweise, wie hier gezeigt, über Schraubelemente 9 starr verbunden. Über die Schraubelemente 9 ist der Tragrahmen 5 vom Gehäuse 1' des Schrittmotors 1 beispielsweise zwecks Wartung lösbar. Im Tragrahmen 5 ist desweiteren die Schaltwelle 11 gelagert. Schaltwelle 11 und Abtriebswelle 3 sind Uber ein torsionselastisches Federelement 2 miteinander gekoppelt. Als Federelement kann beispielsweise ein Silikonschlauch dienen, der so dimensioniert ist, daß er auf die Wellen gestülpt werden kann und im montierten Zustand Uber die reine Adhäslon des Silikonschlauches auf den Wellen die Drehmomente zwischen Abtriebswelle 3 und Schaltwelle 11 übertragen kann. Die Abtriebswelle 3 ist am Uber den Tragrahmen 5 hinausragenden Ende mit einem Ritzel 4 versehen. Dieses Ritzel 4 stellt das erste Element des an die Schaltwelle 11 gekoppelten Getriebes dar. Dieses Ritzel 4 greift in ein großes Außenzahnrad 6 ein, welches ebenfalls am Tragrahmen 5 gelagert befestigt ist. Ritzel 4 und Außenzahnrad 6 sind so aufeinander abgestimmt, daß das Getriebe insgesamt bezüglich der Drehung der Schaltwelle 11 untersetzend ist. Desweiteren weist das Außenzahnrad 6 eine Anformung 8 auf, in Form eines Antriebslaufrades zum Antrieb eines Riemens, wie in Figur 1 dargestellt. Das heißt, das Antriebslaufrad 8 für den Riemen ist einstückig am Zahnrad 6 angeformt. Die ganze Anordnung hat mechanisch die Wirkung, daß bei Beaufschlagung des Schrittmotors 1 die Abtriebswelle 3 die elastischen Federkräfte des torsionselastischen Federelementes 2 nutzt, und die im Anzugsmoment gespeicherte Federenergie entspricht dem Trägheitsmoment sowie der Reibung der anzutreibenden Elemente zuzüglich der Hemmkräfte des Getriebes multipliziert mit dem Federweg und mit entsprechend umgekehrtem Vorzeichen. Das Getriebe ist durch die direkte Anbringung bzw. Lagerung am Tragrahmen der Schrittmotoreinrichtung spielfrei zur Schrittmotoreinrichtung, und das im Getriebe vorhandene restliche Getriebespiel wird durch das Federelement aufgenommen. Daraus ergibt sich, daß die gesamte Schrittmotoreinrichtung extrem geräuscharm läuft und auch bei unstetigen Antriebsbewegungen ein ruckfreier glatter Lauf entlang dem angesteuerten Verstellweg verwirklicht wird.

## Patentansprüche

1. Schrittmotoreinrichtung, bestehend aus einem Schrittmotor (1) mit einer Abtriebswelle (3), einer Schaltwelle (11) und einem Tragrahmen (5) zur Aufnahme und Lagerung der Schaltwelle (11), sowie mit einem aus einem Schlauch aus elastischem Material bestehenden Federelement (2), über welches die Abtriebswelle (3) mit der Schaltwelle (11) torsionselastisch gekoppelt ist,
dadurch gekennzeichnet,
daß die Schaltwelle (11) mit einem untersetzenden Getriebe (4, 6) verbunden ist, welches direkt am Tragrahmen (5) gelagert befestigt ist, und
daß das Federelement (2), bezogen auf die Wellendurchmesser, so dimensioniert ist, daß im auf die Wellen gestülpten Zustand die notwendigen Drehmomente von der Abtriebswelle (3) auf die Schaltwelle (11) übertragbar sind.

2. Schrittmotoreinrichtung nach Anspruch 1,
dadurch gekennzeichnet,
daß das Federelement (2) aus Silikon besteht.

3. Schrittmotoreinrichtung nach einem oder mehreren der vorhergehenden Ansprüche,
dadurch gekennzeichnet,
daß der Tragrahmen (5) einstückig ist.

4. Prozeßschreiber mit einer Schrittmotoreinrichtung nach einem oder mehreren der vorhergehenden Ansprüche zum Antrieb der Schreibelemente des Prozeßschreibers.

5. Prozeßschreiber mit einer Schrittmotoreinrichtung nach einem oder mehreren der vorhergehenden Ansprüche, zum Antrieb der Schrelbelemente, wobei das Getriebe aus einem mit der Schaltwelle direkt verbundenen Ritzel (4) und einem mit dem Ritzel in Eingriff stehenden untersetzenden Zahnrad (6) besteht, und das Zahnrad einen Laufrand (8) zur Aufnahme eines Antriebsriemens aufweist, zum Antrieb der Schreibelemente des Prozeßschreibers.

## Claims

1. A stepping motor device, consisting of a stepping motor (1) having an output shaft (3), a selector shaft (11) and a supporting frame (5) for receiving and mounting the selector shaft (11), and also with a spring element (2) consisting of a tube of elastic material, by means of which the output shaft (3) is coupled to the selector shaft (11) in torsionally elastic manner,
characterised in that
the selector shaft (11) is connected to a step-down gear (4, 6) which is fastened mounted directly to the supporting frame (5), and
that the spring element (2), relative to the shaft diameter, is dimensioned such that in the state in which it is placed on the shafts the required torques can be transmitted from the output shaft (3) to the selector shaft (11).

2. A stepping motor device according to Claim 1, characterised in that the spring element (2) is made of silicone.

3. A stepping motor device according to one or more of the preceding claims, characterised in that the supporting frame (5) is in one piece.

4. A process printer with a stepping motor device according to one of the preceding claims for drivinq the printing elements of the process printer.

5. A process printer with a stepping motor device according to one or more of the preceding claims, for driving the printing elements, the gears consisting of a pinion (4) connected directly to the selector shaft and a step-down gear wheel (6) engaging with the pinion, and the gear wheel has a running rim (edge) (8) for receiving a drive belt for driving the printing elements of the process printer.

## Revendications

1. Dispositif à moteur pas à pas, comportant un moteur pas à pas (1) comprenant un arbre mené (3), un arbre de commutation (11) et un cadre porteur (5) pour recevoir et loger l'arbre de commutation (11), ainsi qu'un élément élastique (2) constitué d'un tuyau en matériau élastique, par l'intermédiaire duquel l'arbre mené (3) est couplé, de façon élastique en torsion, à l'arbre de commutation (11),
caractérisé en ce que l'arbre de commutation (11) est relié à un engrenage démultiplié (4,6) qui est fixé directement sur le cadre porteur (5), et en ce que l'élément élastique (2) est dimensionné, relativement au diamètre d'arbre, de sorte que dans l'état embouti par retournement sur les arbres, les couples nécessaires peuvent être transmis de l'arbre mené (3) à l'arbre de commutation (11).

2. Dispositif à moteur pas à pas selon la revendication 1, caractérisé en ce que l'élément élastique (2) est réalisé en silicone.

3. Dispositif à moteur pas à pas selon l'une ou plusieurs des revendications précédentes,
caractérisé en ce que le cadre porteur (5) est réalisé en une seule pièce.

4. Enregistreur de processus comportant un dispositif à moteur pas à pas selon l'une ou plusieurs des revendications précédentes, pour l'entraînement des éléments d'écriture de l'enregistreur de processus.

5. Enregistreur de processus comportant un dispositif à moteur pas à pas selon l'une ou plusieurs des revendications précédentes, pour l'entraînement des éléments d'écriture, l'engrenage étant constitué d'un pignon (4) relié directement à l'arbre de commutation et d'une roue dentée (6) démultipliée et agissant sur le pignon, et la roue dentée comportant une roue porteuse (8) pour recevoir une courroie d'entraînement, pour l'entraîenment des éléments d'écriture de l'enregistreur de processus.
